# EUROPEAN PATENT APPLICATION

(11) **EP 4 131 747 A1**
(43) Date of publication of application: **08.02.2023**
(21) Application number: 21781969.7
(22) Date of filing: 24.03.2021
(51) Int. Cl.: H02K 15/03, H01F 41/02, H01F 1/053, H01F 1/057, H01F 1/059

(54) **COMPRESSED BONDED MAGNET, MANUFACTURING METHOD THEREFOR, AND FIELD COIL**

(30) Priority: 31.03.2020 JP 2020061825
(71) Applicant: Aichi Steel Corporation, Tokai-shi, Aichi 476-8666 (JP)
(72) Inventor: TSUGE, Yuki, Tokai-shi, Aichi 476-8666 (JP); FUJIMAKI, Tadashi, Tokai-shi, Aichi 476-8666 (JP)
(74) Representative: Kuhnen & Wacker Patent- und Rechtsanwaltsbüro PartG mbB
(86) International application number: PCT/JP2021/012424
(87) International publication number: WO 2021/200517

(57) **Abstract**

The present invention provides a manufacturing method for obtaining a compression-bonded magnet with which it is possible to achieve, at a high level, both a residual magnetic flux density (Br) and the magnitude of a reverse magnetic field (Hk) that reduces Br by 10%. The manufacturing method of the present invention includes a molding step of compressing a bonded magnet raw material composed of a compound or the like of magnetic powder and a binder resin in a heated and oriented magnetic field. The bonded magnet raw material has a mass ratio of the magnet powder of 90 to 95.7 mass% to a total of the magnet powder and the binder resin. The magnet powder includes coarse powder having an average particle diameter of 40 to 200 µm and fine powder having an average particle diameter of 1 to 10 µm. The coarse powder has a mass ratio of 60 to 90 mass% to a total of the coarse powder and the fine powder. The coarse powder includes rare earth anisotropic magnet powder subjected to hydrogen treatment. The binder resin includes a thermosetting resin. The molding step is carried out with a compressing force of 8 to 70 MPa and a heating temperature of 120°C to 200°C.

## Description

### [Technical Field]

The present invention relates to a manufacturing method for a compression-bonded magnet and relevant techniques.

### [Background Art]

To improve performance and save energy, electromagnetic devices (such as electric motors) that use rare earth magnets are frequently used. Rare earth magnets include sintered magnets obtained by sintering rare earth magnet powder and bonded magnets obtained by binding rare earth magnet powder with a binder resin. The bonded magnets have a large degree of freedom in the shape and are more excellent in the moldability than the sintered magnets.

Major examples of the bonded magnets include injection-bonded magnets molded by injecting a molten mixture of magnet powder and thermoplastic resin into a cavity (such as a rotor core slot) of an electromagnetic member and compression-bonded magnets molded by compressing a mixture or kneading of magnet powder and thermosetting resin in a cavity of a mold. The compression-bonded magnets are more excellent in the heat resistance than the injection-bonded magnets because of the use of a thermosetting resin.

Compression-bonded magnets are usually manufactured by high-pressure molding a compound in which the amount of resin is reduced to increase the amount of magnet powder (simply referred to as a "magnet amount") in order to improve the magnetic characteristics (in particular, Br). Descriptions relevant to such conventional compression-bonded magnets are found in the following Patent Document 1.

### [Prior Art Documents]

### [Patent Documents]

Patent Document 1: JP3731597B
Patent Document 2: JP2006-49554A

### [Summary of Invention]

### [Technical Problem]

Patent Document 1 proposes a compression-bonded magnet configured such that the magnet amount is set to 97.5 to 98.5 mass% (resin amount: 1.5 to 2.5 mass%) and the molding pressure is set to 392 to 892 MPa. The residual magnetic flux density (Br) of this compression-bonded magnet is 1.0 T, which is sufficiently large, but the reverse magnetic field (Hk) that demagnetizes Br by 10% is as small as 280 kA/m. Thus, in the compression-bonded magnet obtained by high pressure molding with a reduced resin amount and an increased magnet amount (about 98 mass%), both Br and Hk may not be achieved at a high level.

In contrast to such a bonded magnet obtained by high pressure molding, the above Patent Document 2 describes a bonded magnet obtained by low pressure molding. To achieve a reduced cogging torque and the like, Patent Document 2 proposes, for example, molding a bonded magnet at a low pressure of 15 to 50 MPa while setting the magnet amount to 96.5 to 97.0 mass% and the resin amount to 3 to 3.5 mass%. However, also in such a bonded magnet, the magnet amount is still large, and it is difficult to achieve both Br and Hk at a high level.

The present invention has been made in view of such circumstances, and an object of the present invention is to provide a manufacturing method and the like with which a compression-bonded magnet capable of achieving both Br and Hk at a high level can be obtained.

### [Solution to Problem]

As a result of intensive studies to achieve the above object, the present inventors have successfully obtained a compression-bonded magnet having sufficiently large Br as well as sufficiently large Hk, which is an index of an effective magnetic flux density B with respect to the reverse magnetic field, by setting the magnet amount and the molding pressure (compressing force) within respective ranges different from the conventional ones. Developing this achievement, the present inventors have accomplished the present invention, which will be described below.

### «Manufacturing Method for Compression-bonded Magnet»

(1) An aspect of the present invention provides a manufacturing method for a compression-bonded magnet. The method includes an accommodating step of accommodating a bonded magnet raw material into a cavity. The bonded magnet raw material is composed of a compound in which magnet powder and a binder resin capable of binding the magnet powder are mixed in a granular form or a preliminarily molded body of the compound. The method further includes a molding step of compressing the bonded magnet raw material in the cavity in a heated and oriented magnetic field. The bonded magnet raw material has a mass ratio of the magnet powder of 90 to 95.7 mass% to a total of the magnet powder and the binder resin. The magnet powder includes coarse powder having an average particle diameter of 40 to 200 µm and fine powder having an average particle diameter of 1 to 10 µm. The coarse powder has a mass ratio of 60 to 90 mass% to a total of the coarse powder and the fine powder. The coarse powder includes rare earth anisotropic magnet powder subjected to hydrogen treatment. The binder resin includes a thermosetting resin. The molding step is carried out with a compressing force of 8 to 70 MPa and a heating temperature of 120°C to 200°C.
(2) The compression-bonded magnet (also simply referred to as a "bonded magnet") obtained by the manufacturing method of the present invention develops excellent magnetic characteristics that achieve both Br and Hk at a high level. Hk represents the magnitude of the reverse magnetic field that reduces Br by 10% and is an index of an effective magnetic flux density B with respect to the reverse magnetic field.

Moreover, in the molding step according to the present invention, the deformation (dimensional change) of the cavity or the housing constituting the cavity is small because the applied compressing force is low. According to the manufacturing method of the present invention, therefore, it is easy to ensure the dimensional accuracy of the bonded magnet itself or the magnetic member (such as a field magnetic element) in which the bonded magnet and the housing constituting the cavity are integrated.

### «Compression-bonded Magnet»

The present invention can also be perceived as a compression-bonded magnet. For example, another aspect of the present invention provides a compression-bonded magnet in which magnet powder is bound with a binder resin. The magnetic powder has a mass ratio of 90 to 95.7 mass% to a total of the magnet powder and the binder resin. The magnet powder includes coarse powder having an average particle diameter of 40 to 200 µm and fine powder having an average particle diameter of 1 to 10 µm. The coarse powder has a mass ratio of 60 to 90 mass% to a total of the coarse powder and the fine powder. The coarse powder includes rare earth anisotropic magnet powder subjected to hydrogen treatment. The binder resin includes a thermosetting resin.

In the compression-bonded magnet of the present invention, Br can be, for example, 0.70 T (7.0 kG) or more in an embodiment, 0.72 T (7.2 kG) or more in another embodiment, 0.74 T (7.4 kG) or more in still another embodiment, 0.76 T (7.6 kG) in yet another embodiment, 0.78 T (7.8 kG) or more in a further embodiment, or 0.80 T (8.0 kG) or more in a still further embodiment. Additionally or alternatively, Hk can be, for example, 535 kA/m or more in an embodiment, 540 kA/m or more in another embodiment, or 545 kA/m or more in still another embodiment.

### «Magnetic Member»

The present invention may also be perceived as a magnetic member (such as an electromagnetic member) in which the compression-bonded magnet and a housing having a cavity are integrated. Examples of the magnetic member include a field magnetic element including a housing having a cavity and a compression-bonded magnet that fills the cavity (a compression-bonded magnet that is integrally molded in the cavity).

The field magnetic element is, for example, a rotor or stator of an electric motor. Examples of the electric motor include not only a motor but also a generator. The electric motor may be a DC motor or an AC motor. When the field magnetic element is a rotor, for example, the housing is a rotor core and the cavity is a slot formed in the rotor core. The rotor may be an inner rotor or an outer rotor.

### «Others»

Unless otherwise stated, a numerical range "x to y" as referred to in the present specification includes the lower limit x and the upper limit y. Any numerical value included in various numerical values or numerical ranges described in the present specification may be selected or extracted as a new lower or upper limit, and any numerical range such as "a to b" can thereby be newly provided using such a new lower or upper limit. Unless otherwise stated, a range "x to y µm" as referred to in the present specification means x µm to y µm. The same applies to other unit systems (such as kA/m and kOe).

### [Brief Description of Drawings]

FIG. 1 is an explanatory diagram illustrating B-H curves, J-H curves, and operation lines relating to three types of permanent magnets having different Br and Hk.
FIG. 2 is a schematic diagram illustrating the relationship between Br distribution, magnet amount, and compressing force of bonded magnets.
FIG. 3 is a scatter diagram illustrating the magnet amount and compressing force of each bonded magnet according to examples and their Br and Hk.
FIG. 4A is an SEM image obtained by observing a cross section of a bonded magnet according to Sample 24.
FIG. 4B is an SEM image obtained by observing a cross section of a bonded magnet according to a comparative sample.
FIG. 5 is an appearance photograph of a rotor for IPM in which bonded magnets are integrally molded in slots.
FIG. 6 is a cross-sectional view illustrating a part of a rotor core used for comparing each orientation ratio of a low-pressure compression-molded bonded magnet and an injection-molded bonded magnet.

### [Embodiments for Carrying out the Invention]

One or more features freely selected from the matters described in the present specification can be added to the above-described features of the present invention. Methodological features regarding a manufacturing method can also be features regarding a product. Which embodiment is the best or not is different in accordance with objectives, required performance, and other factors.

### «Evaluation Index of Bonded Magnet/Br, Bd, Hk»

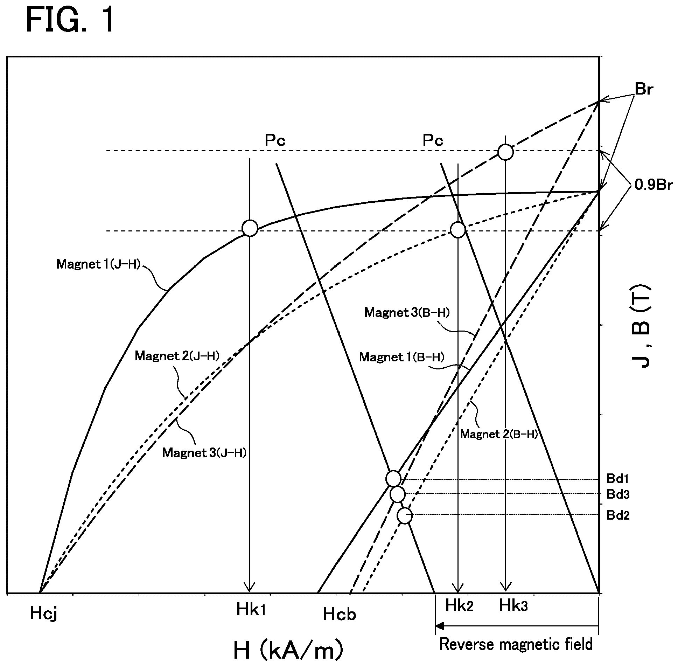

To ensure the output of an electromagnetic device (e.g., an electric motor) composed of a field magnetic element and an armature, the permanent magnet used for the field magnetic element is generally required to have not only a large residual magnetic flux density (simply referred to as "Br") but also a large operating point magnetic flux density (simply referred to as "Bd"). This point will be described with reference to an example of a permanent magnet used for the rotor of an interior permanent magnet-type synchronous motor (IPM/simply referred to as a "motor") while referring to FIG. 1. FIG. 1 illustrates magnetization curves (J-H curves), demagnetization curves (B-H curves), and operation lines (permeance straight lines/Pc: permeance coefficient) for three types of permanent magnets (referred to as "Magnet 1," "Magnet 2," and "Magnet 3") having different magnetic characteristics. Br, Bd, and Hk of each magnet are indicated with corresponding additional numerals (1 to 3). FIG. 1 illustrates a case in which the magnetic characteristics of the magnets are Br1=Br2<Br3 and Magnet 1 is most excellent in its squareness.

When a motor is operating, a reverse magnetic field (Hex) is applied from the armature to the permanent magnets in the rotor. At this time, Bd1>Bd3>Bd2. That is, Bd of Magnet 1 having excellent squareness is larger than that of Magnet 3 having large Br. However, such Bd differs depending on the permeance coefficient Pc determined from the specs of the motor and the current value range determined by the application, operating condition, etc. of the motor. Therefore, Bd may not necessarily be suitable as an index for evaluating the physical properties (magnetic characteristics) of the permanent magnet itself.

Accordingly, in the present specification, permanent magnets (bonded magnets) are evaluated by using Br, which is an index of the magnetization potential, and Hk, which is an index of reverse magnetic field resistance that does not depend on the specs (such as specifications) of an electromagnetic device (such as a motor). As described above, Hk is a magnitude of the reverse magnetic field when the residual magnetic flux density Br of a bonded magnet is lowered by 10%. Hk is related to the supply force of an effective magnetic flux density B when the reverse magnetic field acts from the armature.

For example, when Hk is obtained from the J-H curve of each magnet illustrated in FIG. 1, Hk of Magnet 1 having excellent squareness is sufficiently larger than that of Magnet 3 having large Br. That is, it can be understood that Hk is an accurate index of the squareness, which is important as a characteristic of a bonded magnet used in a motor or the like.

### «Bonded Magnet Raw Material»

The bonded magnet raw material may be a compound or a preliminarily molded body of the compound.

The compound is composed of granules that are a mixture of magnet powder and a binder resin. Mixing (step) may be carried out at a temperature (referred to as a "mixing temperature") equal to or higher than a temperature at which at least the binder resin softens (glass transition point) and lower than a temperature at which a thermosetting resin contained in the binder resin cures (curing temperature). The mixing temperature may be, for example, 40°C to 120°C in an embodiment or 80°C to 100°C in another embodiment, depending on the type and composition of the binder resin (in particular, a thermosetting resin).

Mixing may be carried out while heating, for example, in a non-pressurized state. Also in a case in which a batch type kneader is used, the amount of the compound to be charged may be set, for example, to 75% or less in an embodiment or 65% or less in another embodiment with respect to the processing volume of a processing tank, and the heating and mixing may be carried out in a non-pressurized state while rotating a blade.

The preliminarily molded body is composed of a block in which the above-described compound is molded to have a predetermined form (shape, size). When the preliminarily molded body has a form similar to that of a bonded magnet, the accommodating step can be efficiently performed. The preliminarily molded body may have a form dissimilar to the bonded magnet. For example, it may be one or more subdivided bodies within a range in which the cavity can be filled or loaded with the subdivided bodies. In this case, it is not necessary to prepare a dedicated preliminarily molded body for each bonded magnet, and the versatility of the preliminarily molded body is enhanced.

Preliminary molding (step) may be carried out under a condition with which damage such as cracks is less likely to occur in the magnet particles. For example, the compound may be preliminarily molded by being pressurized at 2 MPa or less in an embodiment or 0.5 MPa or less in another embodiment. The preliminary molding is usually carried out by pressurizing a compound that fills a cavity different from the cavity in which the bonded magnet is molded.

### «Magnet Powder»

The magnet powder includes coarse powder and fine powder having different average particle diameters, and the coarse powder includes rare earth anisotropic magnet powder subjected to hydrogen treatment.

The average particle diameter of the coarse powder is, for example, 40 to 200 µm in an embodiment or 80 to 160 µm in another embodiment. The average particle diameter of the fine powder is, for example, 1 to 10 µm in an embodiment or 2 to 6 µm in another embodiment. The average particle diameter as referred to in the present specification is determined by measurement (measurement using the Fraunhofer method) with a laser diffraction-type particle diameter distribution measuring device (HELOS available from Japan Laser Corporation).

The mass ratio of the coarse powder to the total of the coarse powder and the fine powder (or to the entire magnet powder) is, for example, 60 to 90 mass% in an embodiment or 75 to 85 mass% in another embodiment. In other words, the mass ratio of the fine powder to the total is, for example, 10 to 40 mass% in an embodiment or 15 to 25 mass% in another embodiment.

The mass ratio of the entire magnet powder is, for example, 90 to 95.7 mass% in an embodiment, 91 to 95 mass% in another embodiment, 91.5 to 94.5 mass% in still another embodiment, 92 to 94 mass% in yet another embodiment, or 92.5 to 93.5 mass% in a further embodiment to the entire bonded magnet raw material (bonded magnet) (total of the magnet powder and the binder resin). If the magnet amount is unduly small (e.g., less than 90 mass%), the resin seeps out from the clearance between a mold and a punch during the molding, and burrs are likely to occur. If the magnet amount is unduly large (e.g., more than 95.7 mass%), Hk drops sharply. This tendency is remarkable in a region in which the compressing force is excessive (e.g., more than 70 MPa).

When the particle diameters and ratios of the coarse powder and the fine powder and the magnet amount (resin amount) with respect to the entire bonded magnet raw material (bonded magnet) are within respective predetermined ranges, a bonded magnet excellent in the magnetic characteristics (such as the residual magnetic flux density Br and Hk) can be obtained even in a case of low-pressure molding.

Various types of magnet powders can be used for the coarse powder and the fine powder. According to the manufacturing method of the present invention, even when rare earth anisotropic magnet powder subjected to hydrogen treatment is contained as the coarse powder, cracking of the magnet particles and the like are suppressed. The hydrogen treatment is mainly associated with a disproportionation reaction by hydrogen absorption (Hydrogenation-Disproportionation/also simply referred to as an "HD reaction") and a recombination reaction by dehydrogenation (Desorption-Recombination/also simply referred to as a "DR reaction"). The HD reaction and the DR reaction are collectively referred to as an "HDDR reaction." The hydrogen treatment that causes the HDDR reaction is simply referred to as "HDDR (treatment)."

Unless otherwise stated, the HDDR as referred to in the present specification includes d-HDDR (dynamic-Hydrogenation-Disproportionation-Desorption-Recombination) which is a modified version of the HDDR. The d-HDDR is described in detail, for example, in the international publication (WO2004/064085), etc.

Examples of the coarse powder include NdFeB-based anisotropic magnet powder that contains Nd, Fe, and B as the base components. Examples of the fine powder include SmFeN-based anisotropic magnet powder that contains Sm, Fe, and N as the base components and SmCo-based anisotropic magnet powder that contains Sm and Co as the base components.

NdFeB-based anisotropic magnet powder having an adjusted particle diameter may be used as the fine powder (a part). Additionally or alternatively, magnet powder other than the rare earth anisotropic magnet powder (such as rare earth isotropic magnet powder or ferrite magnet powder) may be contained as a part of the magnet powder. The basic components as referred to in the present specification can be paraphrased as essential components or main components. The total amount of elements as the basic components is usually 80 atomic% or more in an embodiment, 90 atomic% or more in another embodiment, 93 atomic% or more in still another embodiment, or 95 atomic% or more in yet another embodiment with respect to the entire object (magnet particles). The rare earth magnet powder may contain one or more elements that enhance the coercive force, heat resistance, etc. (heavy rare earth elements such as Dy and Tb, Cu, Al, Co, Nb, etc.).

### «Binder Resin»

When the binder resin contains a thermosetting resin, the heat resistance and the like of the bonded magnet is improved. Examples of the thermosetting resin include epoxy resins, phenol resins, melamine resins, urea resins, and unsaturated polyester resins. A typical epoxy resin is usually a mixture of a prepolymer and a curing agent and is cured by cross-linkage networking with epoxy groups. Examples of the prepolymer of epoxy resin for use include novolak-type, bisphenol A-type, bisphenol F-type, biphenyl-type, naphthalene-type, aliphatic-type, and glycidylamine-type ones. Examples of a curing agent to be used for the epoxy resin include amine-based, phenol-based, and acid anhydride-based ones.

When a one-component epoxy resin is used, the timing of thermosetting can be adjusted by curing treatment (thermosetting step), thus enabling efficient batch treatment and the like. The curing treatment is carried out, for example, by heating the bonded magnet after the molding step to 130°C to 250°C in an embodiment or 150°C to 230°C in another embodiment.

Magnet particles may be coated with a surfactant suitable for the binder resin. This can improve the posture variability of the magnet particles in the softened or melted resin, the bindability between the magnet particles and the resin, etc. When an epoxy resin is used, for example, a titanate-based coupling agent or a silane-based coupling agent can be used as the surfactant. The thickness of a surfactant layer may be about 0.1 to 2 µm.

### «Molding Step»

A bonded magnet having a desired shape can be obtained by compressing the bonded magnet raw material accommodated in a cavity in a heated and orientated magnetic field. The compressing force (molding pressure) is, for example, 8 to 70 MPa in an embodiment, 10 to 65 MPa in another embodiment, 15 to 60 MPa in still another embodiment, 20 to 50 MPa in yet another embodiment, or 30 to 40 MPa in a further embodiment.

If the compressing force is unduly small (e.g., less than 8 MPa), Br and relative density of the bonded magnet will be lowered. If the compressing force is unduly large (e.g., more than 70 MPa), Hk will be lowered. This tendency is remarkable in a region in which the magnet amount is excessive (e.g., the magnet powder exceeds 95.7 mass%). Unduly large compressing force may cause a large deformation of the cavity, cracking of the magnetic particles, etc.

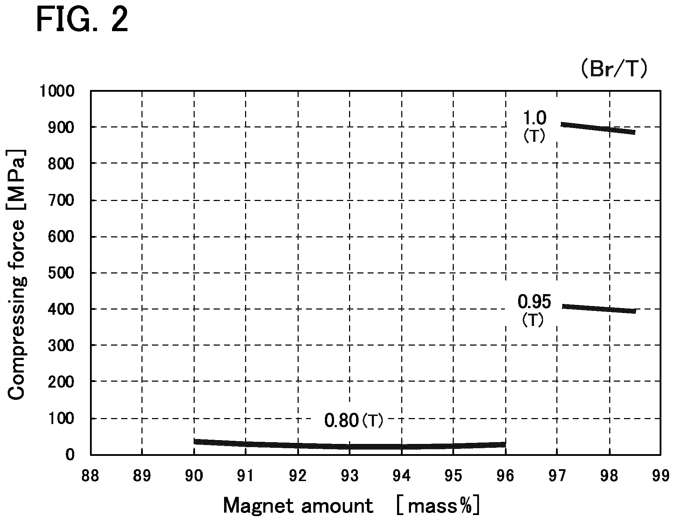

Conventionally, as illustrated in FIG. 2, it has been considered that the higher the compressing force or the larger the magnet amount, the larger the Br of the bonded magnet. Fortunately, however, the present inventors have found that a bonded magnet developing peaked high Br can be obtained by setting the magnet amount to 90 to 96 mass% even in a low-pressure region in which the compressing force is less than 100 MPa, and the present invention has been thus accomplished.

The heating temperature during the molding step is, for example, 120°C to 200°C in an embodiment or 130°C to 170°C in another embodiment. If the heating temperature is unduly low, the binder resin will be insufficiently softened or melted, which may cause cracking of the magnet particles, a decrease in the degree of orientation, etc. If the heating temperature is unduly high, oxidative deterioration of the magnet particles, curing of the thermosetting resin, etc. may proceed.

The oriented magnetic field during the molding step is usually applied in an orientation direction intersecting a compression direction for the bonded magnet raw material. The magnitude of the oriented magnetic field is, for example, 0.5 to 3 T in an embodiment or 1 to 2 T in another embodiment. The oriented magnetic field represents a magnetic flux density on the inner circumferential surface of a cavity in which the bonded magnet is molded. In addition to an electromagnet, a rare earth permanent magnet may be used as the magnetizing source for the oriented magnetic field.

### «Bonded Magnet»

The relative density of the bonded magnet can be, for example, 90% or more in an embodiment, 95% or more in another embodiment, or 98% or more in still another embodiment. The upper limit of the relative density is 99.5% in an embodiment or 100% in another embodiment. The relative density (ρ/ρ₀) is the ratio (percentage) of an actual density (ρ) to a theoretical density (ρ₀). The theoretical density (ρ₀) can be obtained from the true densities of the magnet powder and the binder resin which constitute the bonded magnet and their compounding amounts. The actual density (ρ) can be obtained from the mass and volume obtained by measuring the molded (and further cured) bonded magnet. The volume may be obtained by the Archimedes method, but it suffices that the volume is calculated from the shape (dimensions) of the molded body.

The bonded magnet may be magnetized (magnetizing magnetic field: 2 to 6 T) before or after the curing treatment.

### «Magnetic Member»

Bonded magnets are used for various magnetic members. By integrally molding one or more bonded magnets in respective cavities of a housing (e.g., a rotor core or the like), the magnetic member can be efficiently manufactured. Moreover, the low-pressure molding of the bonded magnet suppresses the deformation of a housing that constitutes the cavity or cavities. This can increase the degree of freedom in designing the housing and improve the accuracy of the magnetic member. A typical example of such a magnetic member is a field magnetic element of an electric motor (motor for driving a vehicle, motor for an air conditioner or home appliances, etc.).

### Examples

A number of samples (compression-bonded magnets) with varying magnet amounts (resin amounts) and compressing force were manufactured and their characteristics were measured/evaluated. The present invention will be described in detail below based on these specific examples.

### «Manufacturing of Samples»

### (1) Magnet Powders and Binder Resin

Magnet powders were prepared, which are a commercially available NdFeB-based anisotropic magnet powder that is the coarse powder manufactured by hydrogen treatment (d-HDDR) (MAGFINE available from AICHI STEEL CORPORATION/Br: 1.28T, iHc: 1313 kA/m, average particle diameter: 125 µm) and a commercially available SmFeN-based anisotropic magnet powder that is the fine powder (SmFeN alloy fine powder C available from Sumitomo Metal Mining Co., Ltd./Br: 1.35 T, iHc: 875 kA/m, average particle diameter: 3 µm).

A binder resin was prepared, which is an epoxy resin that is a thermosetting resin (NC-3000L available from Nippon Kayaku Co., Ltd.). The softening point of this resin is 60°C.

### (2) Bonded Magnet Raw Material

Bonded magnet raw materials were prepared by mixing a magnet powder obtained by weighing the coarse powder and the fine powder at a ratio of 8:2 (almost the same in terms of the mass ratio/volume ratio) with the binder resin at the ratios listed in Table 1. Each magnet amount listed in Table 1 is the mass ratio of the magnet powder to the entire mixture (bonded magnet raw material) as the total of the magnet powder (coarse powder and fine powder) and the binder resin.

The mixing of the magnet powder and the binder resin was performed in a non-pressurized state for 5 minutes while rotating the kneader at a low speed (10 rpm). During this operation, the container body of the kneader was maintained at 90°C. Thus, compounds in which the magnet powder and the binder resin were melt and mixed were obtained (melting and mixing step).

### (3) Molding

Each compound was loaded into the cavity of a mold (accommodating step) and compression-molded in a heated and oriented magnetic field (molding step). During this operation, the temperature of the mold (inner wall surface of the cavity) was 150°C, the oriented magnetic field was 955 kA/m, and the orientation direction was a direction (diameter direction) orthogonal to the compression direction (axial direction). The compressing force was changed for each sample as listed in Table 1.

The bonded magnet may be integrally molded in a slot or the like of a rotor core by using a preliminarily molded body of a compound. The preliminarily molded body is obtained, for example, by filling a cavity having a cross-sectional shape slightly smaller than that of the slot or the like with the compound and pressurizing the compound (preliminarily molding step).

### (4) Curing Treatment

The compression-molded body of the bonded magnet raw material taken out from the cavity of the mold was heated in the air at 150°C for 30 minutes. Thus, a bonded magnet (each sample listed in Table 1) was obtained in which the binder resin was thermally cured.

### (5) Magnetization

Each bonded magnet was magnetized by applying a magnetic field of 6 T to the magnet using an air-core coil.

### «Measurement/Observation»

### (1) Magnetic characteristics

The magnetic characteristics of each sample were measured at room temperature using a DC BH tracer (TRF-SBH-25Auto available from Toei Industry Co., Ltd). Br and Hk determined from the obtained B-H curve are also listed in Table 1.

### (2) Observation

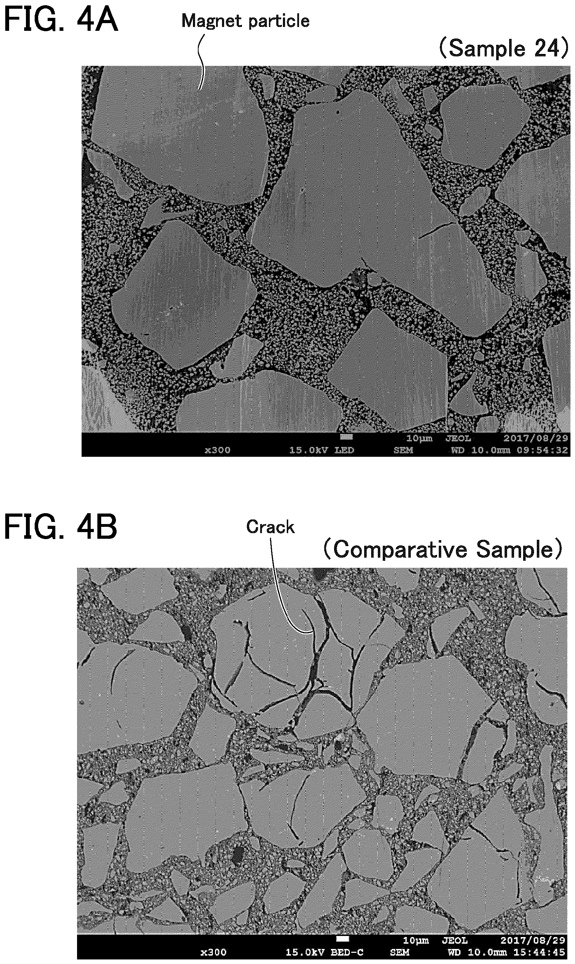

The cross section of the bonded magnet related to each sample was observed with a scanning electron microscope (SEM). From the SEM image, the presence or absence of cracks in the magnet particles of the coarse powder (NdFeB-based anisotropic magnet powder) was determined. The determination results are also listed in Table 1. The SEM images of Sample 24 and a comparative sample described later are shown in FIGS. 4A and 4B (which are collectively referred to as "FIG. 4"), respectively.

### «Evaluation»

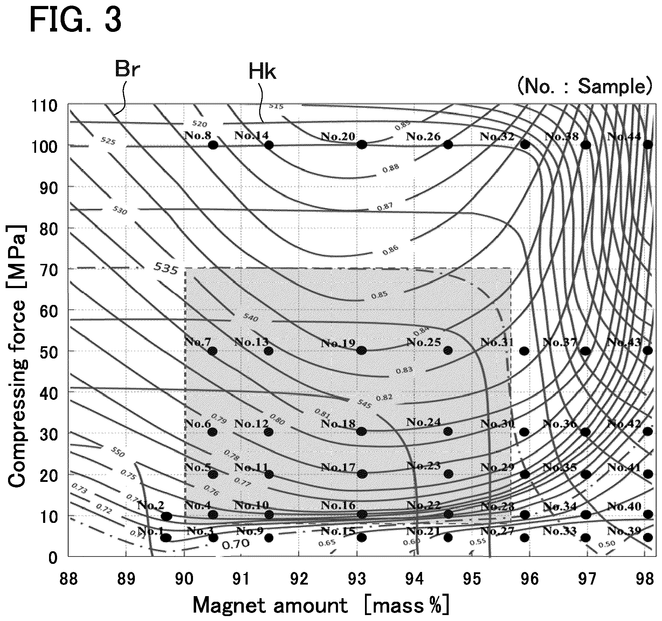

For each sample listed in Table 1, contour lines related to Br and Hk are illustrated in FIG. 3 with the magnet amount on the horizontal axis and the compressing force on the vertical axis. The Br contour lines are displayed every 0.01 T, and the Hk contour lines are displayed every 5 kA/m. Note, however, that the Br contour lines of 0.70 T or less are displayed every 0.05 Br for convenience.

### (1) Br

As apparent from FIG. 3, Br increased as the compressing force increased. When the compressing force was 10 MPa or less, Br began to decrease sharply, and when the compressing force was less than 8 MPa, Br was less than 0.7 T. Moreover, contrary to the conventional common general technical knowledge, it can be found that when the compressing force is 8 to 110 MPa in some examples or 10 to 100 MPa in some other examples, there are peaks of Br around a magnet amount of 93 mass%. It can also be found that when the compressing force changes from the vicinity of 10 MPa to a low-pressure region, the magnet amount giving a peak of Br shifts from around 93 mass% to around 90 mass%.

### (2) Hk

As apparent from FIG. 3, Hk decreased as the compressing force increased. In addition, Hk decreased as the magnet amount increased. In particular, when the magnet amount exceeded 95.7 mass%, Hk decreased sharply.

### (3) Magnet Amount

When the magnet amount was 89.6 mass%, even at the compressing force being 5 MPa or 10 MPa, the resin seeped out from the clearance between the mold and the punch, and burrs occurred. In order to avoid damage to the molding machine, when the magnet amount was 89.6 mass%, molding was not performed with a compressing force higher than that.

From the above results, when Br is 0.7 T or more and Hk is 535 kA/m or more, for example, the magnet amount may be set to 90 to 95.7 mass% and the compressing force may be set to 8 to 70 MPa.

### (4) Cross Sections

As apparent from FIG. 4A, it can be found that in the bonded magnet of Sample 24 (magnet amount: 93.1 mass%, compressing force: 30 MPa), even coarse magnet particles of a class having a particle diameter of 100 µm are not cracked. The internal crack on the right side of the coarse magnet particle in the center of the photograph has not grown.

As apparent from FIG. 4B, in the comparative sample (magnet amount: 95.0 mass%, compressing force: 200 MPa), many magnet particles were cracked. This appears to be because the compressing force was excessive with respect to the magnet amount. The comparative sample was manufactured in the same manner as the other samples except for the magnet amount and the compressing force.

### (5) Consideration

From the above, when the magnet amount and the compressing force were within specific ranges, both Br and Hk were able to be achieved at a high level. The reason can be inferred as follows. In the case of the manufacturing method of the present invention, low-pressure molding is performed with a relatively large amount of resin. Therefore, even in the coarse magnet particles, the posture variation is easy, sufficient orientation is ensured, and the particles are less likely to be cracked. As a result, it is considered that both the high Br and the high Hk were achieved even when the content of the coarse magnet powder, which is the main source of magnetic force, was relatively small.

In particular, it is considered that the high Hk was developed by suppressing the disorder of the orientation of the magnet particles and the local deterioration of the magnetic characteristics due to the generation of a new surface or the like caused by the cracking of the magnet particles. It is thus considered that the J-H curves of the bonded magnets were suppressed from being steeply inclined from the Br points with respect to the J-H curve of the magnet powder as the raw material, and the sharp decrease in Hk was also suppressed accordingly.

### «Rotor»

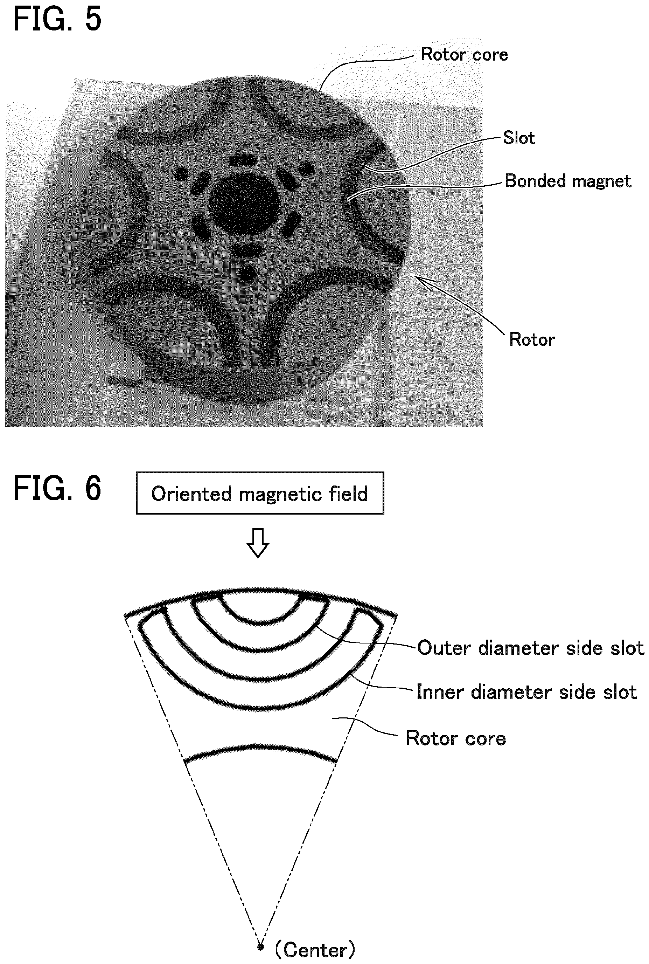

(1) The bonded magnet listed as Sample 24 was integrally molded (low-pressure compression molding) in each of the slots (cavities) of a rotor core (housing/electromagnetic member) of an interior permanent magnet-type synchronous motor (IPM). The appearance of the rotor (field magnetic element) thus obtained is shown in FIG. 5. The rotor core is composed of a laminate of silicon steel plates punched into a desired shape.

Almost no deformation occurred even in the thin portions located on the outer circumferential edges of the slots, because the compressing force applied to the bonded magnet was low. It has thus been confirmed that a rotor for IPM with high accuracy (roundness, cylindricity) can be obtained.

(2) As illustrated in FIG. 6, bonded magnets were low-pressure compression-molded and injection-molded into multi-layer slots (inner diameter side slot and outer diameter side slot) provided in each pole of a rotor core (8 magnetic poles). The orientation ratio of the low-pressure compression-molded bonded magnets and the orientation ratio of the injection-molded bonded magnets were each obtained. The orientation ratio as referred to herein is the ratio of a residual magnetic flux density (Brx) when the oriented magnetic field: x kA/m is applied with respect to a residual magnetic flux density (Br0) when the oriented magnetic field: 1591 kA/m (20 kOe) is applied (Brx/Br0).

The compression molding was performed under the same condition as that for Sample 24 described above. The injection molding was performed using the above-described magnet powder (coarse powder:fine powder=8:2) and binder resin (PPS: 9.2 mass%) at an injection pressure of 150 MPa. Both in the compression molding and the injection molding, the temperature of the rotor core during the molding was set to 150°C.

When performing the low-pressure compression molding, the orientation ratios were higher on both the outer diameter side and the inner diameter side than those when performing the injection molding. As an example, when a rotor outer diameter side in-cavity orientated magnetic field (x) of 955 kA/m and a rotor inner diameter side in-cavity orientated magnetic field (x) of 637 kA/m were applied, the orientation ratios in the low-pressure compression molding were 99% in the outer diameter side bonded magnet and 97% in the inner diameter side bonded magnet, and the orientation ratios in the injection molding were 95% in the outer diameter side bonded magnet and 93% in the inner diameter side bonded magnet. It has thus been found that even when the oriented magnetic field is the same, the low-pressure compression molding not only increases the overall orientation ratios, but also suppresses the decrease in the orientation ratio of the inner diameter side bonded magnet (whose oriented magnetic field decreases) with respect to the outer diameter side bonded magnet.

From the above, by adopting a low-pressure compression-molded bonded magnet for a rotor, it is expected that the torque of the motor will be improved even when the same magnetic field is generated in the stator, as compared with the case in which the injection molding is adopted.

**[Table 1]**

| Sample No. | Manufacturing conditions | | | Characteristics of bonded magnet | | Evaluation |
|---|---|---|---|---|---|---|
| | Bonded magnet raw material | | Compressing force | Br | Hk | Cracking of magnet particles |
| | Magnet amount (mass%) | Resin amount (mass%) | | | | |
| | | | (MPa) | (T) | (kA/m) | ○:Almost none |
| | | | | | | ×:Present |
| 1 | 89.7 | 10.3 | 5 | 0.71 | 549 | ○ |
| 2 | 89.7 | 10.3 | 10 | 0.74 | 549 | ○ |
| 3 | 90.5 | 9.5 | 5 | 0.71 | 549 | ○ |
| 4 | 90.5 | 9.5 | 10 | 0.74 | 549 | ○ |
| 5 | 90.5 | 9.5 | 20 | 0.77 | 549 | ○ |
| 6 | 90.5 | 9.5 | 30 | 0.79 | 549 | ○ |
| 7 | 90.5 | 9.5 | 50 | 0.81 | 543 | ○ |
| 8 | 90.5 | 8.5 | 100 | 0.86 | 525 | × |
| 9 | 91.5 | 8.5 | 5 | 0.70 | 549 | ○ |
| 10 | 91.5 | 8.5 | 10 | 0.75 | 549 | ○ |
| 11 | 91.5 | 8.5 | 20 | 0.78 | 548 | ○ |
| 12 | 91.5 | 8.5 | 30 | 0.80 | 548 | ○ |
| 13 | 91.5 | 8.5 | 50 | 0.83 | 543 | ○ |
| 14 | 91.5 | 8.5 | 100 | 0.88 | 525 | × |
| 15 | 93.1 | 6.9 | 5 | 0.65 | 549 | ○ |
| 16 | 93.1 | 6.9 | 10 | 0.76 | 549 | ○ |
| 11 | 93.1 | 6.9 | 20 | 0.79 | 547 | ○ |
| 18 | 93.1 | 6.9 | 30 | 0.81 | 547 | ○ |
| 19 | 93.1 | 6.9 | 50 | 0.84 | 541 | ○ |
| 20 | 93.1 | 6.9 | 100 | 0.89 | 525 | × |
| 21 | 94.6 | 5.4 | 5 | 0.58 | 543 | ○ |
| 22 | 94.6 | 5.4 | 10 | 0.72 | 543 | ○ |
| 23 | 94.6 | 5.4 | 20 | 0.78 | 543 | ○ |
| 24 | 94.6 | 5.4 | 30 | 0.80 | 542 | ○ |
| 25 | 94.6 | 5.4 | 50 | 0.83 | 541 | ○ |
| 26 | 94.6 | 5.4 | 100 | 0.88 | 525 | × |
| 27 | 95.9 | 4.1 | 5 | 0.53 | 537 | ○ |
| 28 | 95.9 | 4.1 | 10 | 0.70 | 537 | ○ |
| 29 | 95.9 | 4.1 | 20 | 0.78 | 536 | ○ |
| 30 | 95.9 | 4.1 | 30 | 0.80 | 533 | × |
| 31 | 95.9 | 4.1 | 50 | 0.83 | 533 | × |
| 32 | 95.9 | 4.1 | 100 | 0.86 | 525 | × |
| 33 | 97.0 | 3.0 | 5 | 0.52 | 535 | ○ |
| 34 | 97.0 | 3.0 | 10 | 0.60 | 533 | × |
| 35 | 97.0 | 3.0 | 20 | 0.72 | 528 | × |
| 36 | 97.0 | 3.0 | 30 | 0.76 | 525 | × |
| 37 | 97.0 | 3.0 | 50 | 0.81 | 515 | × |
| 38 | 97.0 | 3.0 | 100 | 0.83 | 501 | × |
| 39 | 98.1 | 1.9 | 5 | 0.49 | 530 | × |
| 40 | 98.1 | 1.9 | 10 | 0.56 | 528 | × |
| 41 | 98.1 | 1.9 | 20 | 0.63 | 525 | × |
| 42 | 98.1 | 1.9 | 30 | 0.70 | 517 | × |
| 43 | 98.1 | 1.9 | 50 | 0.74 | 501 | × |
| 44 | 98.1 | 1.9 | 100 | 0.78 | 477 | × |

## Claims

1. A manufacturing method for a compression-bonded magnet, comprising:
an accommodating step of accommodating a bonded magnet raw material into a cavity, the bonded magnet raw material being composed of a compound in which magnet powder and a binder resin capable of binding the magnet powder are mixed in a granular form or a preliminarily molded body of the compound; and
a molding step of compressing the bonded magnet raw material in the cavity in a heated and oriented magnetic field,
the bonded magnet raw material having a mass ratio of the magnet powder of 90 to 95.7 mass% to a total of the magnet powder and the binder resin,
the magnet powder including coarse powder having an average particle diameter of 40 to 200 µm and fine powder having an average particle diameter of 1 to 10 µm, the coarse powder having a mass ratio of 60 to 90 mass% to a total of the coarse powder and the fine powder,
the coarse powder including rare earth anisotropic magnet powder subjected to hydrogen treatment,
the binder resin including a thermosetting resin,
the molding step being carried out with a compressing force of 8 to 70 MPa and a heating temperature of 120°C to 200°C.

2. The manufacturing method for a compression-bonded magnet according to claim 1, wherein
the coarse powder includes NdFeB-based anisotropic magnet powder whose base components are Nd, Fe, and B, and
the fine powder includes SmFeN-based anisotropic magnet powder whose base components are Sm, Fe, and N and/or SmCo-based anisotropic magnet powder whose base compositions are Sm and Co.

3. The manufacturing method for a compression-bonded magnet according to claim 1 or 2, wherein the thermosetting resin is an epoxy resin.

4. The manufacturing method for a compression-bonded magnet according to any one of claims 1 to 3, wherein the oriented magnetic field in the molding step is 0.5 to 3 T applied in an orientation direction intersecting a compression direction for the bonded magnet raw material.

5. The manufacturing method for a compression-bonded magnet according to any one of claims 1 to 4, wherein the compound is obtained by mixing the binder resin softened or melted and the magnet powder.

6. The manufacturing method for a compression-bonded magnet according to any one of claims 1 to 5, wherein a field magnetic element is obtained in which the compression-bonded magnet is integrated with a housing having the cavity.

7. The manufacturing method for a compression-bonded magnet according to claim 6, wherein
the housing is a rotor core of an electric motor, and
the cavity is a slot provided in the rotor core.

8. A compression-bonded magnet in which magnet powder is bound with a binder resin,
the magnetic powder having a mass ratio of 90 to 95.7 mass% to a total of the magnet powder and the binder resin,
the magnet powder including coarse powder having an average particle diameter of 40 to 200 µm and fine powder having an average particle diameter of 1 to 10 µm, the coarse powder having a mass ratio of 60 to 90 mass% to a total of the coarse powder and the fine powder,
the coarse powder including rare earth anisotropic magnet powder subjected to hydrogen treatment,
the binder resin including a thermosetting resin.

9. A field magnetic element comprising:
a housing having a cavity; and
the compression-bonded magnet according to claim 8, the compression-bonded magnet being integrally molded in the cavity.
